# EUROPEAN PATENT SPECIFICATION

(11) **EP 4 652 756 B1**
(45) Date of publication and mention of the grant of the patent: **26.08.2026**
(21) Application number: 23702057.3
(22) Date of filing: 19.01.2023
(51) Int. Cl.: H04W 4/80, H04W 4/70

(54) **METHODS AND APPARATUS FOR SETTING UP A COLLABORATIVE SENSING PROCESS**
VERFAHREN UND VORRICHTUNG ZUR EINRICHTUNG EINES KOLLABORATIVEN ERFASSUNGSPROZESSES
PROCÉDÉS ET APPAREIL POUR ÉTABLIR UN PROCESSUS DE DÉTECTION COLLABORATIVE

(43) Date of publication of application: 26.11.2025
(73) Proprietor: Telefonaktiebolaget LM Ericsson (publ), 164 83 Stockholm (SE)
(72) Inventor: ARKKO, Jari, 02700 KAUNIAINEN (FI); SAARISALO, Mikko, 02460 Kantvik (FI); KERÄNEN, Ari, 00210 Helsinki (FI)
(74) Representative: Ericsson
(86) International application number: PCT/EP2023/051195
(87) International publication number: WO 2024/153330

(56) References cited:
- CN-A- 112 566 240
- US-A1- 2016 094 936
- US-A1- 2019 132 709
- US-B2- 10 419 886

## Description

### TECHNICAL FIELD

The present disclosure relates to a method for setting up a collaborative sensing process with an observer. The method may be performed by a user equipment. The present disclosure relates to a method for setting up a collaborative sensing process with the user equipment. The method may be performed by the observer. The present disclosure also relates to a user equipment, an observer, a computer program and a computer program product comprising the computer program, to carry out a method for setting up a collaborative sensing process with the observer, and a computer program and a computer program product comprising the computer program, to carry out a method for setting up a collaborative sensing process with the user equipment.

### BACKGROUND

Some of the sensing techniques employed in the field of environment sensing are Light Detection and Ranging, LIDAR, Photogrammetry and Radio Detection and Ranging, RADAR.

LIDAR is a sensing method for determining variable distance and it is used for creating digital three-dimensional representation of an environment and objects in an environment. Many User Equipments, UEs, are integrating LIDAR sensing method in recent times.

In WO 2020 107317 A1, a distributed LIDAR management system is disclosed. In the disclosure, multiple distance measurement devices (for example a LIDAR) measure distances between the measurement devices and the features of an environment. The disclosed distributed management system collects distance measurements from multiple LIDARs and combines the distance measurements to form a distance measurement dataset.

RADAR is a sensing method using radio waves to determine position, orientation and velocity of objects in an environment. RADAR has traditionally been implemented for airborne and maritime applications (civil and military), although it has also been used for speed checking in traffic applications, and collision detection. In the future, many UEs may integrate RADAR sensing method.

Photography is the process of recording an image - a photograph - on light sensitive film or, in the case of digital photography, via a digital electronic or magnetic memory.

Photogrammetry is a method to create three-dimensional representation of an environment and objects in an environment and it is also employed by some UEs. Photogrammetry is a method to extract information about a physical environment by measuring and interpreting photographic images and patterns of electromagnetic radiant imagery and other phenomena associated with the photographic images.

Cellular radio technology evolves toward 6G and higher frequencies, perhaps sub-terahertz frequencies, may be used. The higher frequencies and shorter wavelengths enable higher data rates for communication. Recent research on 6G points to the use of cellular radio frequencies in a RADAR-like fashion, to enable the sensing of environment and objects. Radio transmissions do not only enable communication, but the radio signals can be observed and measured for other purposes as well and this process is called Joint Communication and Sensing (JCAS). Radio signal reflections, attenuation, and absorption provide information about the environment around the radio systems. With higher frequencies, antenna arrays, beamforming technologies, and advanced signal processing, the cellular radio network can increasingly be used for sensing and perception. Some examples of use cases of JCAS include the ability to measure weather through signal attenuation in rain, object detection through signal reflections, or object speed detection through doppler effects in the reflected signal.

Many sensing applications available on UEs combine data obtained using multiple sensing methods, for example, a mobile application called Polycam uses data from LIDAR to build a three-dimensional model of an environment and data from a camera to add texture and color to the three-dimensional model of the environment built using the data from LIDAR. The process of combining data from multiple sensors is called sensor fusion. The nature of the lidar, radar, and photography processes is that measurements from these processes can be combined to attain a good coverage of an environment being sensed or an object being sensed in an environment.

US 2016/094936 A1 discloses a wearable computing device that generates sensor data indicative of a location context of the wearable computing device and transmits the sensor data to a mobile computing device. The mobile computing device generates local sensor data indicative of a location context of the wearable computing device and fuses the local sensor data with the sensor data received from the wearable computing device. The mobile computing device determines a context of the wearable computing device based on the fused sensor data. The mobile computing device determines whether an adjustment to the functionality of the wearable computing device is required based on the determined context. The mobile computing device manages the functionality of the wearable computing device in response to determining that an adjustment to the functionality is required.

An important aspect of sensing an environment or an object in an environment using a UE is coverage. Coverage of a UE can be defined as how well an environment or an object in an environment is sensed by the UE. A problem with sensing an environment or an object in an environment using a UE is attaining a good coverage. Attaining a good coverage causes the UE to spend more energy.

### SUMMARY

An object of the invention is to reduce energy consumption of a User Equipment, UE, when the UE is sensing an environment or an object in an environment.

The invention is defined by the independent claims.

Preferred embodiments are defined in the dependent claims.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIGURE 1a illustrates the steps of a method performed by a first UE to set up a collaborative sensing process with an observer.
FIGURE 1b illustrates the steps of a method performed by an observer to set up a collaborative sensing process with a first UE.
FIGURE 2 shows the first UE and the observer.
FIGURE 3 shows the first UE.
FIGURE 4 illustrates an embodiment of the invention wherein the observer is the second UE.
FIGURE 5 illustrates an embodiment of the invention wherein the observer is the second UE.
FIGURE 6 shows the first UE and the second UE.
FIGURE 7 illustrates an embodiment of the invention wherein the observer is the communication network node.
FIGURE 8 shows the first UE and the communication network node.
FIGURE 9 shows an example of multiple UEs participating in a collaborative sensing process.
FIGURE 10 depicts the first UE.
FIGURE 11 depicts the observer.

### DETAILED DESCRIPTION

As used herein, a user equipment, UE, refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, personal digital assistant (PDA). Other examples include any UE identified by the 3rd Generation Partnership Project (3GPP), including a narrow band internet of things (NB-loT) UE, a machine type communication (MTC) UE, and/or an enhanced MTC (eMTC) UE. A UE in the form of an Internet of Things (IoT) device may be a device for use in one or more application domains, these domains comprising, but not limited to, home, city, wearable technology, extended reality, industrial application, and healthcare.

By way of example, the loT device for a home, an office, a building or an infrastructure may be a baking scale, a coffee machine, a grill, a fridge, a refrigerator, a freezer, a microwave oven, an oven, a toaster, a water tap, a water heater, a water geyser, a sauna, a vacuum cleaner, a washer, a dryer, a dishwasher, a door, a window, a curtain, a blind, a furniture, a light bulb, a fan, an air-conditioner, a cooler, an air purifier, a humidifier, a speaker, a television, a laptop, a personal computer, a gaming console, a remote control, a vent, an iron, a steamer, a pressure cooker, a stove, an electric stove, a hair dryer, a hair styler, a mirror, a printer, a scanner, a photocopier, a projector, a hologram projector, a 3D printer, a drill, a hand-dryer, an alarm clock, a clock, a security camera, a smoke alarm, a fire alarm, a connected doorbell, an electronic door lock, a lawnmower, a thermostat, a plug, an irrigation control device, a flood sensor, a moisture sensor, a motion detector, a weather station, an electricity meter, a water meter, and a gas meter.

By further ways of example, the loT device for use in a city, urban, or rural areas may be connected street lighting, a connected traffic light, a traffic camera, a connected road sign, an air control/monitor, a noise level detector, a transport congestion monitoring device, a transport controlling device, an automated toll payment device, a parking payment device, a sensor for monitoring parking usage, a traffic management device, a digital kiosk, a bin, an air quality monitoring sensor, a bridge condition monitoring sensor, a fire hydrant, a manhole sensor, a tarmac sensor, a water fountain sensor, a connected closed circuit television, a scooter, a hoverboard, a ticketing machine, a ticket barrier, a metro rail, a metro station device, a passenger information panel, an onboard camera, and other connected device on a public transport vehicle.

As further way of example, the communication loT device may be a wearable device, or a device related to extended reality, wherein the device related to extended reality may be a device related to augmented reality, virtual reality, merged reality, or mixed reality. Examples of such IoT devices may be a smart-band, a tracker, a haptic glove, a haptic suit, a smartwatch, clothes, eyeglasses, a head mounted display, an ear pod, an activity monitor, a fitness monitor, a heart rate monitor, a ring, a key tracker, a blood glucose meter, and a pressure meter.

As further ways of example, the loT device may be an industrial application device wherein an industrial application device may be an industrial unmanned aerial vehicle, an intelligent industrial robot, a vehicle assembly robot, and an automated guided vehicle.

As further ways of example, the loT device may be a transportation vehicle, wherein a transportation vehicle may be a bicycle, a motor bike, a scooter, a moped, an auto rickshaw, a rail transport, a train, a tram, a bus, a car, a truck, an airplane, a boat, a ship, a ski board, a snowboard, a snow mobile, a hoverboard, a skateboard, roller-skates, a vehicle for freight transportation, a drone, a robot, a stratospheric aircraft, an aircraft, a helicopter and a hovercraft.

The UE, according to an embodiment, comprises a communication interface.

The communication interface of the UE may enable the UE to wirelessly communicate with communication network nodes and/or other UEs. The UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). The communication interface of the UE may comprise communication functions such as cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

As used herein, a communication network includes an access network such as a radio access network (RAN), and a core network which comprises one or more core network nodes. The access network comprises one or more access network nodes or network nodes, such as 3rd Generation Partnership Project (3GPP) access nodes or non-3GPP access points. Moreover, as will be appreciated by those of skill in the art, a network node is not necessarily limited to an implementation in which a radio portion and a baseband portion are supplied and integrated by a single vendor. Thus, it will be understood that network nodes include disaggregated implementations or portions thereof. For example, in some embodiments, the communication network comprises one or more Open-RAN (ORAN) network nodes. An ORAN network node is a node in the communication network that supports an ORAN specification (e.g., a specification published by the O-RAN Alliance, or any similar organization) and may operate alone or together with other nodes to implement one or more functionalities of any node in the communication network, including one or more access network nodes and/or core network nodes. The communication network node may transmit system information signal to the UE. System information signal is a downlink signal transmitted periodically by the communication network node.

Obtaining information about an environment or an object in an environment is referred to as "sensing" the environment or "sensing" the object in the environment. "Sensing" the environment or "sensing" an object in the environment may mean to obtain for example a characteristic of the environment or of the object in the environment. The method of obtaining information about an environment or an object in an environment is called a sensing method. The information obtained via the sensing may be referred to as observation(s). The signals, for example electromagnetic signals, that can be used to obtain observations are referred to as sensing signals. The sensing signals can be light signals. The sensing signals can be radio signals. The sensing method may include a radio detection and ranging (RADAR) method, or a light detection and ranging (LIDAR) method, or a photographic method, and other known methods to sense the environment and sense the objects in the environment.

The UE may include a sensing interface. The sensing interface of the UE may comprise equipment to perform a sensing method. The sensing method performed by the UE may comprise transmitting sensing signals to obtain observations about an environment or an object in an environment. The sensing method performed by the UE may comprise receiving sensing signals to obtain observations about an environment or an object in an environment. The sensing method performed by the UE may comprise receiving reflections of transmitted sensing signals to obtain information about an environment or an object in an environment. The sensing signals can be light signals. The sensing signals can be radio signals.

The sensing interface of the UE may comprise an equipment, for example a LIDAR equipment, to perform the sensing method such as LIDAR. The LIDAR sensing method may comprise transmitting light signals to obtain observations about an environment or an object in an environment. The LIDAR sensing method may comprise receiving light signals to obtain observations about an environment or an object in an environment. The sensing interface of the UE may comprise an equipment, for example a RADAR equipment, to perform the sensing method such as RADAR. The RADAR sensing method may comprise transmitting radio signals to obtain observations about an environment or an object in an environment. RADAR sensing method may comprise receiving radio signals to obtain observations about an environment or an object in an environment. The sensing interface of the UE may comprise an equipment, for example a camera, to perform the sensing method such as photography. Photography may comprise receiving light signals to obtain observations about an environment or an object in an environment. Photography includes visible light photography, infrared photography, ultraviolet photography. The UE may obtain observation results. Observation results obtained by the UE may comprise the outputs or conclusions obtained by inputting the observations obtained by the UE to various computer vision tasks. Computer vision tasks may comprise tasks like object recognition, virtual mapping of an environment, mapping and localization.

A problem with the UE sensing an environment or sensing an object in an environment is attaining a good coverage. Attaining a good coverage causes the UE to spend more energy.

An environment may refer to a total area or volume of space. An object in an environment may refer to any object in the total area or volume. For example, an environment may refer to a road or a lane and an object in an environment may refer to a vehicle or traffic sign on the road or lane.

The term coverage may refer to a portion of the total area or volume that can be observed or sensed by an observer. The term coverage may also refer to angles or directions from which the object in an environment can be observed or sensed by an observer. The term coverage may refer to textures or colours of the environment or the object in the environment that can be observed or sensed by an observer. The term coverage may refer to dimensions of the environment or the object in the environment that can be observed or sensed by an observer.

A good coverage by the UE may refer to the ability of the UE to sense a large portion of the total area or the environment. A good coverage by the UE may refer to the ability of the UE to sense the object in the environment from multiple different angles or directions. A good coverage by the UE may refer to the ability of the UE to sense multiple colours of the environment or the object in the environment. A good coverage by the UE may refer to the ability of the UE to sense multiple textures of the environment or the object in the environment. A good coverage by the UE may refer to the ability of the UE to sense the three-dimensions of the environment or the object in the environment.

Attaining a good coverage enables the UE to gather better information about an environment or an object in an environment. By gathering better information about an environment or an object in an environment, the UE can perform better at various computer vision tasks like object recognition, virtual mapping of an environment, mapping and localization of an environment etc. But the UE needs to spend energy and computation resources to attain a good coverage.

A collaborative sensing process is a potential solution for enabling the UE to attain a good coverage of an environment or an object in an environment while enabling the reduction of energy and computation resources spent on attaining a good coverage.

A collaborative sensing process is a process in which at least two observers sensing an environment or sensing an object in an environment can sense the environment or object in an environment together and share their observations and/or share the results obtained. An observer can be an entity that can comprise a sensing interface. The observer may use the sensing interface to perform a sensing method. The observer may obtain observations using the sensing interface and performing the sensing method. The sensing method performed by the observer may comprise transmitting sensing signals to obtain information about an environment or an object in an environment. The sensing method performed by the observer may comprise receiving sensing signals to obtain information about an environment or an object in an environment. The sensing method performed by the observer may comprise receiving reflections of transmitted sensing signals to obtain information about an environment or an object in an environment. The sensing signals can be light signals. The sensing signals can be radio signals.

The sensing method performed by the observer may include all the sensing method already listed with reference to the sensing method available to the UE.

The at least two observers performing the collaborative sensing process may be of the same type, e.g. two UEs may perform the collaborative sensing process, or of different types, e.g. an UE and a network node may perform the collaborative sensing process. Furthermore, any number of observers can participate to the collaborative sensing process, as long as this number is equal to or bigger than 2.

This invention relates to a method and apparatus to set up and preferably authorize collaborative sensing process among several observers, such as UEs among themselves or/and one or more communication network nodes. The UE and the communication network node (if present) are equipped to perform a sensing method. The sensing method may be a method like LIDAR, RADAR or photography, as described above as available sensing methods to UE and/or observer. The invention may relate to the set-up steps of the collaborative sensing process.

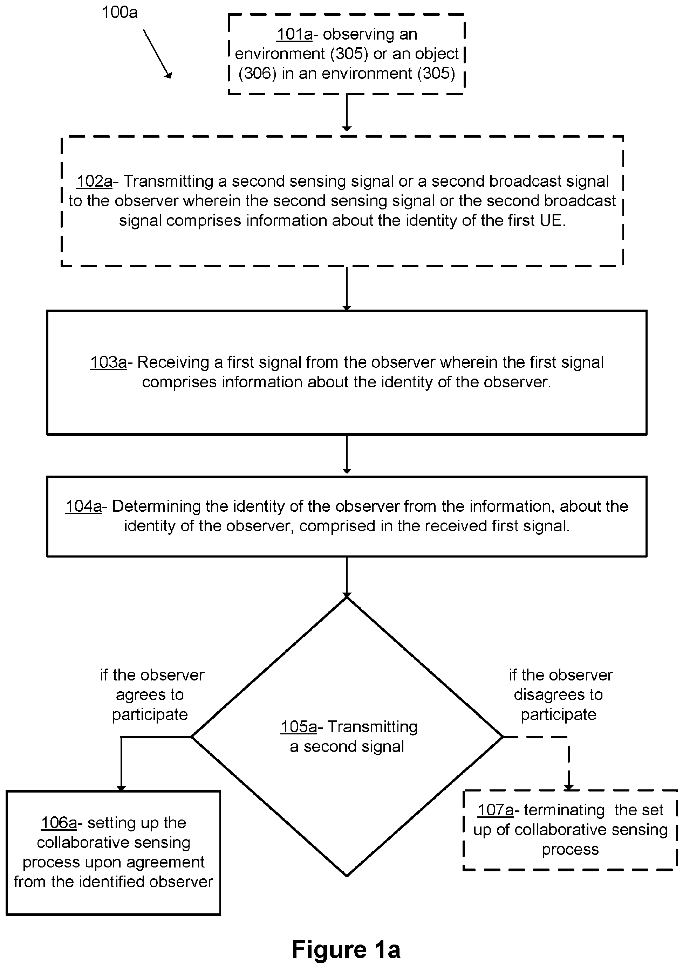

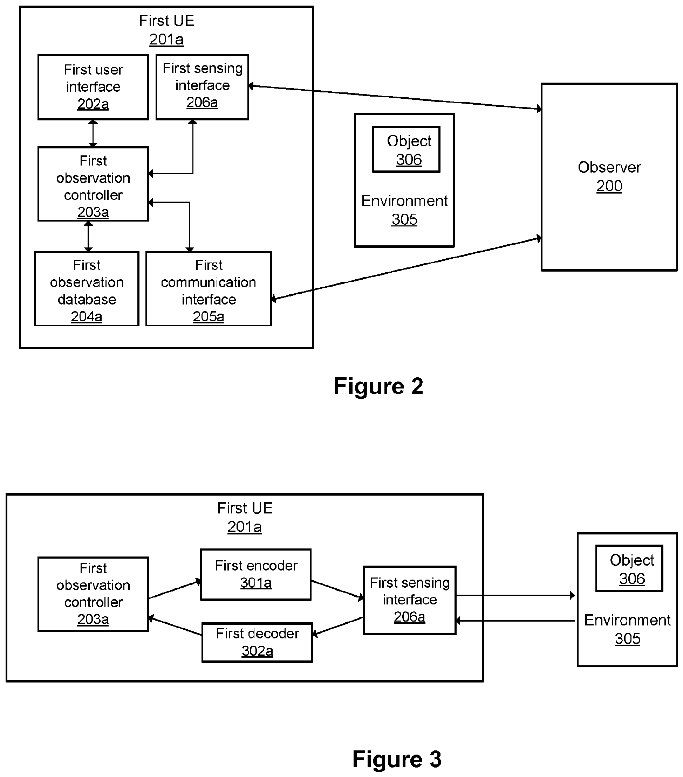

Figure 1a illustrates steps of a method 100a according to the invention performed by a first UE 201a (depicted in Figure 2) to set up a collaborative sensing process with an observer 200 (depicted in Figure 2) observing an environment 305 or an object 306 in the environment 305. The first UE may have the properties of the UE above described.

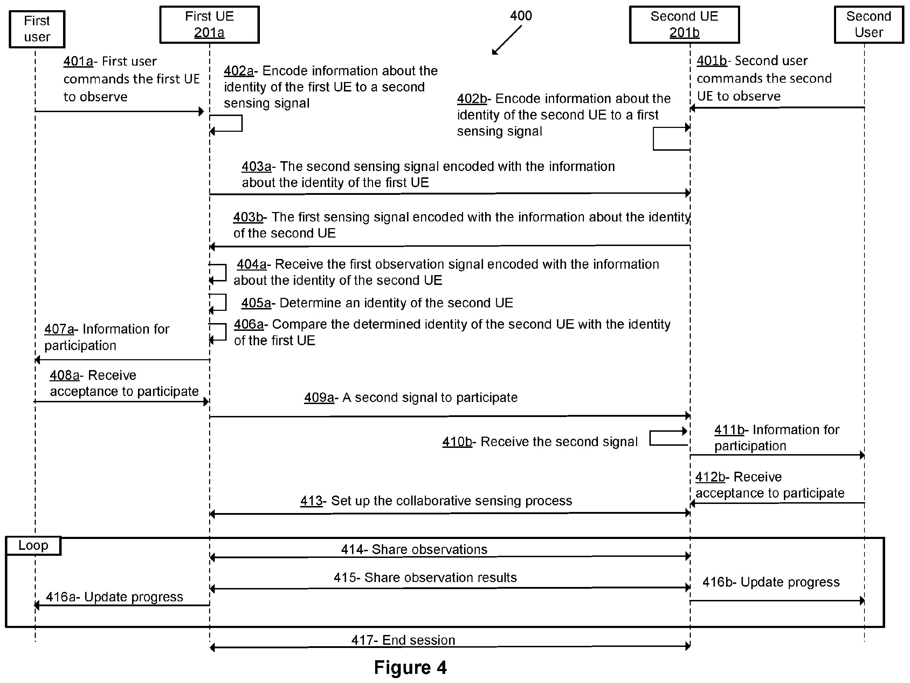

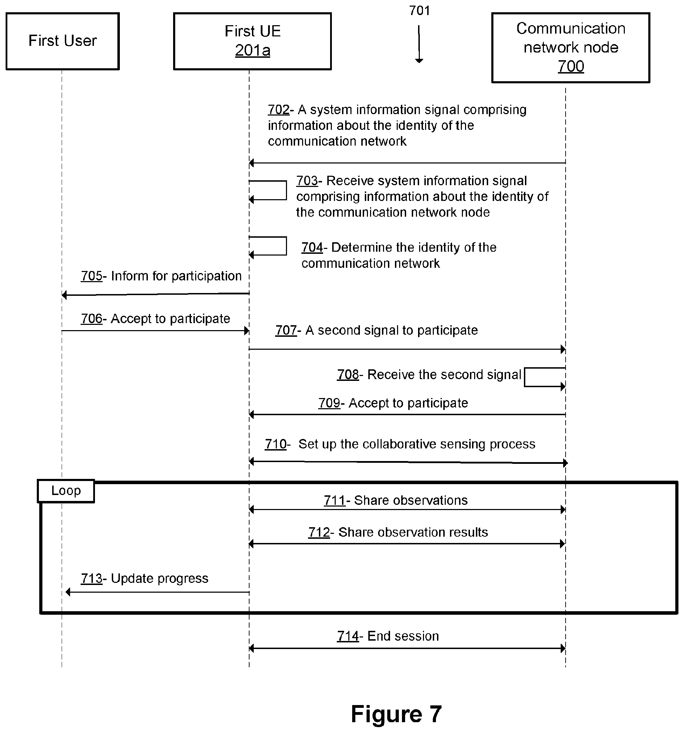

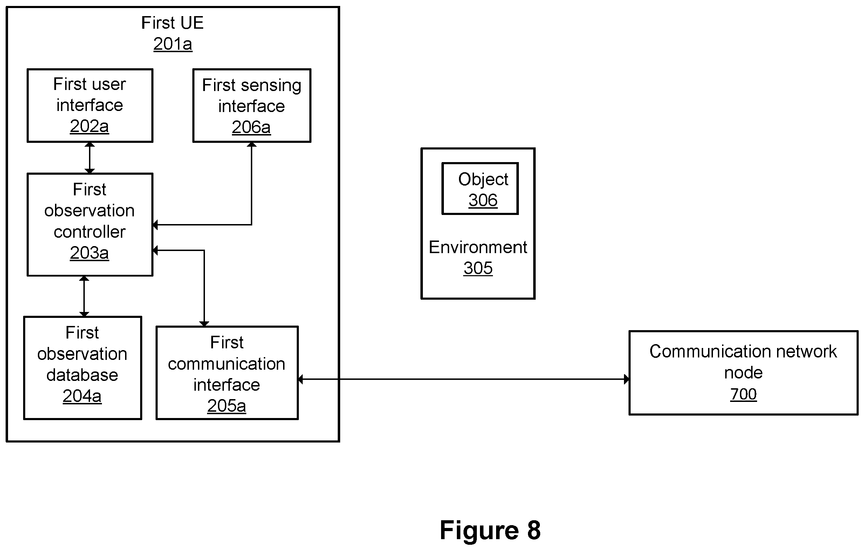

The method 100a comprises, in step 103a, receiving a first signal from the observer 200 wherein the first signal comprises information about an identity of the observer 200. In some embodiments, the observer 200 can be a second UE 201b (as depicted in Figures 4, 5 and 6). In some embodiments, the observer 200 can be a communication network node 700 (as depicted in Figures 7 and 8).

In an embodiment, the first signal may include a first sensing signal. In this embodiment, the first signal includes the signal used to sense the environment or the object in the environment (called sensing signal) and at the same time carries information about the identity of the observer. In an embodiment, the first sensing signal can be a first electromagnetic signal. In an embodiment, the first sensing signal can be a first light signal. In an embodiment, the first sensing signal can be a first radio signal.

In a different embodiment, the first signal includes the first sensing signal and a first broadcast signal. In this embodiment, the first broadcast signal may include the information about the identity of the observer. Preferably, in this embodiment, the first sensing signal does not include the information about the identity of the observer. In some embodiments, the observer 200 can be the second UE 201b. The information about an identity of the observer 200 may comprise an information about the identity of the second UE 201b.

In a different embodiment, the first signal includes a system information signal. In this embodiment, the observer 200 can be the communication network node 700. System information signal is a downlink signal transmitted periodically by the communication network node. The system information signal comprises the information about the identity of the communication network node 700.

The information about the identity of the observer, such as for example the second UE 201b, may comprise an identifier of the second UE 201b. The information about the identity of the second UE 201b may be equal to the identifier of the second UE 201b. The identifier of the second UE 201b can be an International Mobile Equipment Identity, IMEI, number of the second UE 201b. The identifier of the second UE 201b can be a Media Access Control, MAC, address of the second UE 201b. The identifier of the second UE 201b can be an identifier of the second UE 201b that is newly created upon every reboot of the second UE 201b. The identifier of the second UE can be an identifier that is newly created by the second UE 201b for every collaborative sensing process that the second UE 201b may want to set up.

Information about the identity of the second UE 201b may comprise a part or whole of an output obtained by inputting the identifier of the second UE 201b to a one-way hash function.

Information, In, about the identity of the second UE 201b may be equal to the following function $In = cut \left(h\left(identifier of the second UE\right),n\right)$

A one-way hash function, *h(input),* is a mathematical function that generates a unique value for any given input. In this case, the input to the one-way hash function is the identifier of the second UE 201b.

*cut (input, n)* is a function to extract first n bits from an input to the function, where *n* is a positive integer number different from zero. In this case, the input to the *cut()* function is the output obtained by inputting the identifier of the second UE to the one-way hash function *h()* and n is a selected integer, for example, in an embodiment, n is equal to the entire length of the identifier of the second UE 201b.

In some embodiments, the observer 200 can be the communication network node 700. For example, the communication network node 700 can be an access network node, the information about the identity of the observer 200 may comprise an identifier of the access network node. The communication network node 700 can be an ORAN network node, the information about the identity of the observer 200 may comprise an identifier of the ORAN network node.

The method 100a comprises, in step 104a, determining the identity of the observer 200 from the information, about the identity of the observer 200, comprised in the received first signal. In this step, for example, the first UE 201a may understand whether the observer is the second UE 201b or the communication network node 700.

Further, the method 100a comprises, in step 105a, transmitting a second signal to the identified observer 200 for requesting the identified observer 200 to participate in the collaborative sensing process. Second signal can be a signal transmitted according to one or more communication protocols and/or standards, Long Term Evolution (LTE), or NR, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

If the observer 200 agrees to participate, the method 100a comprises, in step 106a, setting up the collaborative sensing process upon agreement from the identified observer 200.

The collaborative sensing process may comprise sharing of observations or observation results between the observer 200 and the first UE 201a. For example, the collaborative sensing process may comprise sharing of observations or observation results obtained by the observer 200 with the first UE 201a. The collaborative sensing process may also comprise sharing of observations or observation results obtained by the first UE 201a with the observer 200.

The step of setting up the collaborative sensing process upon agreement from the observer may comprise establishing one or more communication channels between the first UE 201a and the observer 200. For example, these channels may be needed to share the observations. Parameters that may be exchanged between the first UE 201a and the observer 200 may comprise information about communication channels that may need to be established between the first UE 201a and the observer 200. Communication channels may enable the first UE 201a and the observer 200 to share observations or observation results.

Setting up 106a the collaborative sensing process upon agreement from the observer 200 may comprise: using a common protocol in the communications between first UE 201a and the observer 200. Parameters that may be exchanged between the first UE 201a and the observer 200 may comprise information about transport protocols that may need to be established between the first UE 201a and the observer 200. Transport protocols may enable the first UE 201a and the observer 200 to share observations or observation results.

Setting up 106a the collaborative sensing process upon agreement from the observer (200) may comprise: sending an encryption key to the observer (200). Parameters that may be exchanged between the first UE 201a and the observer 200 may comprise encryption keys that may need to be shared between the first UE 201a and the observer 200. Encryption keys may enable the first UE 201a and the observer 200 to securely share observations or observation results.

Setting up the collaborative sensing process between the first UE 201a and the observer 200 may comprise exchanging parameters that may be required for the collaborative sensing between the first UE 201a and the observer 200.

In some embodiments, the method 100a may comprise, in step 107a, not setting up the collaborative sensing process if the observer 200 disagrees to participate.

In some embodiments, the first UE 201a may also be performing a sensing method to sense the environment or an object in the environment. The environment and/or the object are the same environment and/or object observed by the observer 200. This can be represented as optional step 101a. Optional steps are depicted as dashed boxes in Figure 1a. The sensing performed by the first UE may take place using one or more of the sensing methods mentioned above, with reference to observation methods available to the UE. In order to sense the environment or the object, the first UE 201a may transmit a second sensing signal in step 102a. The second sensing signal is the signal used by the first UE to sense the environment or the object in the environment. The second sensing signal may comprise information about the identity of the first UE 201a. The second sensing signal may have the same characteristics of the first sensing signal described above. Using the second sensing signal, the first UE 201a may obtain observations or observation results about the environment 305 or the object 306.

Alternatively or in addition, the first UE 201a may transmit a second broadcast signal in step 102a. The second broadcast signal may comprise information about the identity of the first UE 201a. The second broadcast signal may comprise the information about the identity of the first UE 201a. The second broadcast signal may comprise information to indicate that the first UE 201a is observing the environment 305 or the object 306 in the environment 305. Therefore, in an embodiment the method may comprise that the first UE 201a transmits two signals, the second broadcast signal, including information about the identity of the first UE, and the second sensing signal.

In an embodiment, the information about the first UE 201a are encoded in the second sensing signal and/or in the second broadcast signal using one of on-off keying, OOK, amplitude-shift keying, ASK, or frequency-shift keying mechanisms, FSK, mechanisms.

In some embodiments, the information about the identity of the first UE 201a may comprise an identifier of the first UE 201a. The identifier of the first UE 201a can have the same characteristics of the identifier of the second UE 201a above described.

Information about the identity of the first UE 201a may comprise a part or whole of an output obtained by inputting the identifier of the first UE 201a to a one-way hash function.

Information, In, about the identity of the first UE 201a may be equal to the following function $In = cut \left(h\left(identifier of the first UE 201a\right),n\right)$

A one-way hash function, *h(input),* is a mathematical function that generates a unique value for any given input. In this case, the input to the one-way hash function is the identifier of the first UE 201a.

*cut (input, n)* is a function to extract first n bits from an input to the function, where *n* is a positive integer number different from zero. In this case, the input to the *cut()* function is the output obtained by inputting the identifier of the first UE 201a to the one-way hash function *h()* and n is a selected integer, for example, in an embodiment, n is equal to the entire length of the identifier of the first UE 201a.

The first sensing signal transmitted by the observer and the second sensing signal transmitted by the first UE 201a may have one or more identical characteristics. The word identical should be understood "identical" for the specified purpose, and not considered as a mathematical identity. The one or more characteristics identical in the first sensing signal and in the second sensing signal are as such in order for the first UE 201a and observer to receive the first sensing signal and the second sensing signal, respectively. The identical characteristic of the first sensing signal and the second sensing signal may comprise, but not limited to, the wavelength of the first sensing signal and second sensing signal (i.e. they have the same wavelength), frequency of the first sensing signal and the second sensing signal (i.e. they have the same frequency).

Further, the first sensing signal may have one or more characteristics different from the second sensing signal. The first sensing signal can be distinguished from the second sensing signal based on the information about the identity of the observer comprised in the first sensing signal. The second sensing signal can be distinguished from the first sensing signal based on the information about the identity of the first UE 201a comprised in the second sensing signal. Therefore, in a comparison between the first sensing signal and the second sensing signal, it can be understood that they are sent by different entities.

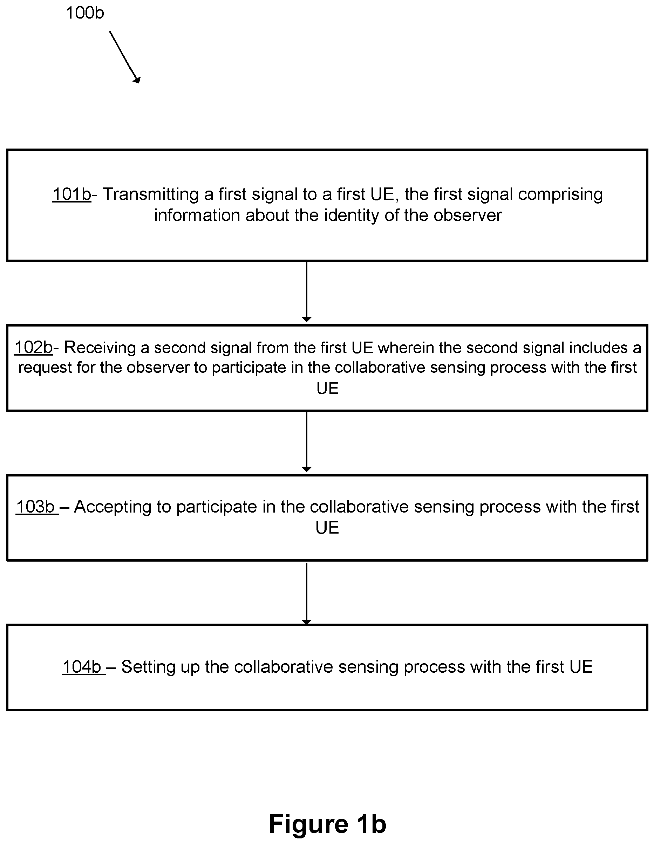

Figure 1b illustrates the steps of a method 100b performed by the observer 200 (depicted in Figure 2) to set up a collaborative sensing process with the first UE 201a (depicted in Figure 2). The observer 200, as mentioned, is sensing the environment or an object in the environment.

The method 100b comprises, in step 101b, transmitting a first signal to the first UE 201a. The first signal comprising information about the identity of the observer 200.

The first signal has been already described with reference to the method of figure 100a and it is not repeated here. In some embodiments, the observer 200 can be the second UE 201b. The information about the identity of the observer 200 may comprise an information about the identity of the second UE 201b. Information about the identity of the second UE 201b is as described in relation to method 100a.

In some embodiments, the observer 200 can be the communication network node 700. The information about the identity of the observer 200 may comprise an information about the identity of the communication network node 700. Information about the identity of the communication network node 700 is as described in relation to method 100a.

The method 100b comprises, in step 102b, receiving a second signal from the first UE 201a wherein the second signal is for requesting the observer 200 to participate in the collaborative sensing process with the first UE 201a.

The method 100b comprises, in step 103b, accepting to participate in the collaborative sensing process with the first UE 201a.

The method 100b comprises, in step 104b, setting up the collaborative sensing process with the first UE 201a. Setting up the collaborative sensing process is as described as in relation to method 100a.

Figure 2 shows the first UE 201a and the observer 200. The first UE 201a may comprise a first sensing interface 206a. Possible sensing interfaces have been already described above with reference to the description of the UE. The first sensing interface 206a may enable the first UE 201a, in step 103a, to receive the first signal from the observer 200 wherein the first signal comprises information about the identity of the observer 200. For example, if the first signal comprises or is the first light signal, the first sensing interface 206a may comprise LIDAR equipment to receive the first light signal. For example, if the first signal comprises or is the first radio signal, the first sensing interface 206a may comprise RADAR equipment to receive the first radio signal.

The first UE 201a may comprise a first communication interface 205a. Possible communication interfaces have been already described above with reference to the description of a generic UE. In some embodiments, the first communication interface 205a may enable the first UE 201a, in step 103a, to receive the first signal from the observer 200 wherein the first signal comprises information about the identity of the observer 200. The first signal may comprise or be equal to the first broadcast signal. The first signal may comprise or be equal to the system information signal.

The first UE 201a may comprise a first observation controller 203a. The first observation controller 203a may comprise a processing circuitry. The first observation controller 203a may comprise one or more microprocessors. The first observation controller 203a may control the first sensing interface 206a and the first communication interface 205a.The first observation controller 203a may enable the first UE 201a, in step 104a, to determine the identity of the observer 200 from the information, about the identity of the observer 200, comprised in the received first signal. In this step, for example, the first UE 201a may understand whether the observer 200 is the second UE 201b or the communication network node 700.

The first communication interface 205a may enable the first UE 201a, in step 105a, to transmit the second signal to the identified observer 200 for requesting the identified observer 200 to participate in the collaborative sensing process. For example, transmission of the second signal may be implemented by the first communication interface 205a according to one or more communication protocols and/or standards, Long Term Evolution (LTE), or NR, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox. If the observer 200 agrees to participate, the first observation controller 203a may enable the first UE 201a, in step 106a, to set up the collaborative sensing process upon agreement from the identified observer 200.

In some embodiments, the first observation controller 203a may enable the first UE 201a, in step 107a, not to setup the collaborative sensing process if the observer 200 disagrees to participate.

In some embodiments, the first UE 201a may, in step 101a, observe the environment 305 or the object 306 in the environment 305.

In some embodiments, the first sensing interface 205a may enable the first UE 201a, in step 102a, to transmit the second sensing signal to the observer 200, the second sensing signal comprising information about the identity of the first UE 201a. For example, if the second sensing signal comprises or is the second light signal, the first sensing interface 206a may comprise LIDAR equipment to transmit the second light signal. For example, if the second sensing signal comprises or is the second radio signal, the first sensing interface 206a may comprise RADAR equipment to transmit the second radio signal. In some embodiments, the first communication interface 205a may enable the first UE 201a, in step 102, to transmit the first broadcasting signal or the second sensing signal to the observer 200. For example, transmission of the second broadcast signal may be implemented by the first communication interface 205a according to one or more communication protocols and/or standards, wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

The first UE 201a may comprise a first user interface 202a. The first user interface 202a of the first UE 201a may include one or more of a screen, a touch screen, buttons, voice control, or other type of interface that enables the user to interact with the first UE 201a.

The first UE 201a may comprise a first observation database 204a. The first observation database 204a of the first UE 201a may store the observations shared between the first UE 201a and the observer 200 during the collaborative sensing process. Observations may comprise images, obtained using the sensing method photography, of an environment 305 or an object 306 in an environment 305. Observations may comprise LIDAR point cloud data of an environment 305 or an object 306 in an environment 305. LIDAR point cloud data refers to data points collected when an environment or an object in an environment is observed using the sensing method LIDAR. Observations may comprise RADAR point cloud data an environment 305 or an object 306 in an environment 305. RADAR point cloud data refers to data points collected when an environment or an object in an environment is observed using the sensing method RADAR. The first observation database 204a of the first UE 201a may also store the observation results that are shared between the first UE 201a and the observer 200. For example, observation results may comprise a result that the environment 305 or the object 306 in the environment 305 is a road.

The first observation database 204a of the first UE 201a may also store control information. Control information may refer to information regarding the collaborative sensing process. For example, control information may comprise information about the environment 305 or the object 306 in the environment 305 that the first UE 201a and the observer 200 may observe.

Figure 4 illustrates an embodiment of the invention wherein the observer 200 is the second UE 201b. Figure 4 is a flow chart illustrating process steps of method 400, an embodiment of method 100a, performed by the first UE 201a for setting up a collaborative sensing process with the second UE 201b.

The method 400 may comprise, a step 401a, where the first user of the first UE 201a directs (e.g., commands) the first UE 201a to observe the environment 305 or the object 306 in the environment 305. To observe the environment 305 or the object 306 in the environment 305, the first UE 201a may transmit the second sensing signal in step 403a, as an embodiment of step 101a of method 100a.

Before transmitting the second sensing signal to observe the environment 305 or the object 306 in the environment 305, the method 400 may comprise, in step 402a, encoding information about the identity of the first UE 201a to the second sensing signal. The second sensing signal in this way may comprise information about the identity of the first UE 201a, as an embodiment of step 102a of method 100a. Information about the identity of the first UE 201a can be encoded to the second sensing signal using one of on-off keying, OOK, amplitude-shift keying, ASK, or frequency-shift keying mechanisms, FSK, mechanisms.

In a further embodiment, the second sensing signal may have the same characteristics and properties as described with reference to the second sensing signal of method 100a.

In an embodiment where the second sensing signal is a second electromagnetic signal, the second electromagnetic signal may comprise information that may increase the probability of distinguishing the second sensing signal from other electromagnetic signals which may be present in the environment. Information that may increase the probability of distinguishing the second sensing signal from other electromagnetic signals may comprise bit string of fixed length, for example, "1000010000110". The second electromagnetic signal can be encoded with the bit string of fixed length using one of OOK, ASK, or FSK mechanisms. Additionally, or alternatively, the second electromagnetic signal may have a specific wavelength to distinguish the second electromagnetic signal as a sensing signal. For example, the second electromagnetic signal can be the second light signal with a 712.34 nm wavelength transmitted by the LIDAR equipment comprised in the first UE 201a.

The method 400 may comprise, as an embodiment of step 102a of method 100a, in step 403a, transmitting the first sensing signal encoded with the information about the identity of the first UE 201a.

In parallel or in sequence to the above steps of 401a, 402a, 403a performed by the first UE 201a, the second UE 201b may perform one or more of the steps 401b, 402b and 403b.

The method 400 may comprise a step 401b, where a second user of the second UE 201b directs the second UE 201b to observe the environment 305 or the object 306 in the environment 305. The environment and/or the object are the same environment and/or object observed by the first UE 201a. To observe the environment 305 or the object 306 in the environment 305, the second UE 201b may transmit the first sensing signal, as an embodiment of step 101b of method 100b. This first sensing signal is received by the first UE 201a, as an embodiment of step 103a of method 100a. The first sensing signal comprises information about the identity of the second UE 201b.

Before transmitting the first sensing signal to observe the environment 305 or the object 306 in the environment 305, the method 400 comprise, in step 402b, encoding information about the identity of the second UE 201b to the first sensing signal. Information about the identity of the second UE 201b can be encoded to the first sensing signal using one of OOK, ASK, or FSK, mechanisms.

The first sensing signal has been already described with reference to the embodiment of the methods 100a, 100b described in figures 1a and 1b.

The first electromagnetic signal may comprise information that may increase the probability of distinguishing the first sensing signal from other electromagnetic signals, which may be present in the environment. Information that may increase the probability of distinguishing the first sensing signal from other electromagnetic signals may comprise bit string of fixed length, for example, "1000010000110". The first electromagnetic signal can be encoded with the bit string of fixed length using one of OOK, ASK, or FSK mechanisms. Additionally, or alternatively, the second electromagnetic signal may also have a specific wavelength to distinguish the second electromagnetic signal as a sensing signal. For example, the first electromagnetic signal can be the first light signal with a 712.34 nm wavelength transmitted by the LIDAR equipment comprised in the second UE 201b.

The method 400 may comprise, in step 403b, the second UE 201b transmitting the first sensing signal encoded with the information about the identity of the second UE 201a. This signal is received by the first UE, as an embodiment of step 103a of method 100a.

The second sensing signal transmitted by the first UE 201a and the first sensing signal transmitted by the second UE 201b may have one or more identical characteristics. The word identical should be understood "identical" for the specified purpose, and not considered as a mathematical identity. The one or more characteristics identical in the first sensing signal and in the second sensing signal are as such in order for the first UE 201a and the second UE 201b to receive the first sensing signal and the second sensing signal, respectively. The identical characteristic of the first sensing signal and the second sensing signal may comprise, but not limited to, the wavelength of the first sensing signal and second sensing signal (i.e. they have the same wavelength), frequency of the first sensing signal and the second sensing signal (i.e. they have the same frequency). For example, the first sensing signal and the second sensing signal may both have a 712.34 nm wavelength. The first UE 201a may comprise the LIDAR equipment to transmit the second light signal with a 712.34 nm wavelength, then the LIDAR equipment comprised in the first UE 201a may also enable the first UE 201a to receive the first sensing signal if the first sensing signal is the second light signal with a 712.34 nm wavelength.

In an embodiment where the second sensing signal is a second electromagnetic signal, the first sensing signal may have one or more characteristics different from the second sensing signal. The first sensing signal can be distinguished from the second sensing signal based on the information about the identity of the second UE 201a comprised in the first sensing signal. The second sensing signal can be distinguished from the first sensing signal based on the information about the identity of the first UE 201a comprised in the second sensing signal. Therefore, in a comparison between the first sensing signal and the second sensing signal, it can be understood that they are sent by different UEs.

Since the first UE 201a may also observe the environment 305 or the object 306 in the environment 305, the first UE 201a may transmit the second sensing signal as described above and receive a reflection of the transmitted second sensing signal. For example, if the second sensing signal is the second radio signal transmitted by a RADAR equipment comprised in the first UE 201a, then the reflection of the transmitted second radio signal is referred to as a RADAR return. If the first UE 201a had transmitted the second radio signal and waits for receiving the reflection of transmitted second radio signal but instead receives the first radio signal (as the first sensing signal) transmitted by the second UE 201b, the first UE 201a may consider the first radio signal as the reflection of the second radio signal, in this scenario the first radio signal received by the first UE 201a is a false RADAR return for the first UE 201a. False RADAR returns may lead to false observations. Thus, the first UE 201a may receive a few signals when sensing, that is after transmitting the second sensing signal, which are the reflections of the transmitted second sensing signals or the first sensing signal.

To enable the first UE 201a to distinguish between the reflection of the transmitted second sensing signal and the first sensing signal transmitted by the second UE 201b, in step 405a, the first UE 201a may determine the identity of the second UE 201b by decoding the information encoded in the received first sensing signal. Step 405a is an embodiment of the step 104a of method 100a. The first UE 201a may further perform the step 406a of comparing the determined identity of the second UE 201b with the identity of the first UE 201a to determine that the second UE 201b is not the first UE 201a. Step 406a, may enable the first UE 201a to determine that received first sensing signal is actually transmitted by the second UE 201b and not the reflection of the second sensing signal transmitted by the first UE 201a.

Even if the step of comparing the identity of the first UE to the identity of the second UE is not performed, the identity of the second UE 201b is always determined in step 405a (embodiment of step 104a of the method 100a) because the identity of the second UE 201b (or in general of the observer) is needed in the further step.

The method 400 may comprise, in step 407b, sending to the first user information that there is a possibility to participate in the collaborative sensing process with the identified second UE 201b. Upon receiving an acceptance from the first user in step 408a, given for example by touching the screen of the first UE 201a, the first UE 201a may transmit the second signal to the second UE 201b to request the second UE 201b to participate in the collaborative sensing process with the first UE 201a, in step 409a, an embodiment of the 105a of method 100a.

The second signal has been already described with reference to the embodiment of the methods 100a, 100b described in figures 1a and 1b.

The second UE 201b may receive the second signal in the step 410b, an embodiment of the step 102b of the method 100b.

The method 400 may comprise, in step 411b, the second UE 201b sending information to the second user of the second UE 201b about the fact that the first UE 201a has sent an invitation to participate in the collaborative sensing process. The second user may accept the invitation. in step 412b, as an embodiment of step 103b of the method 100b. The collaborative sensing process can be set up between the first UE 201a and the second UE 201b in step 413, as an embodiment of steps 106a and 104b of methods 100a and 100b respectively.

The method 400 may comprise repeating steps 414, 415, 416a, 416b. The method 400 may comprise, in step 414, sharing of observations between the first UE 201a and the second UE 201b. The method 400 may comprise, in step 415, sharing of observation results between the first UE 201a and the second UE 201b. The collaborative sensing process may comprise sharing of observation results. The collaborative sensing process may comprise sharing of observations. The method 400 may comprise, in step 416a, updating the first user of the first UE 201a with the progress of steps 414 and/or 415. The method 400 may comprise, in step 416b, updating the second user of the second UE 201b with the progress of steps 414 and/or 415.

The method 400 may comprise a termination step 417. In the termination step, the first user of the first UE 201a and the second user of the second UE 201b may agree to end the collaborative sensing process, the collaborative sensing process may be end between the first UE 201a and the second UE2101b in step 417.

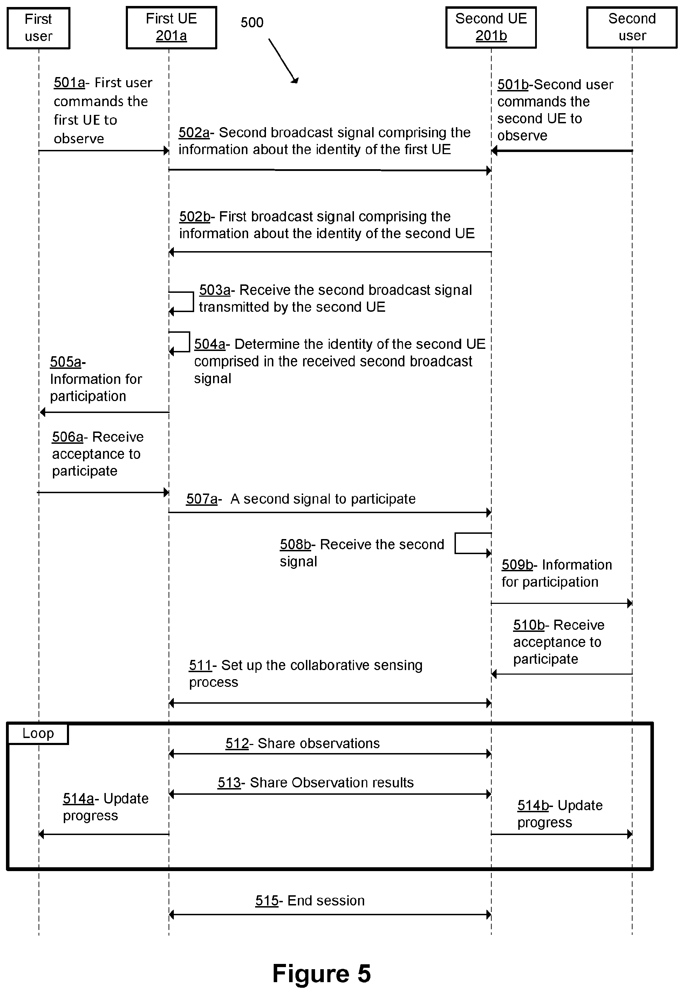

Figure 5 illustrates an embodiment of the invention wherein the observer 200 is the second UE 201b. Figure 5 is a flow chart illustrating process steps of method 500, an embodiment of the method 100a, performed by the first UE 201a for setting up a collaborative sensing process with the second UE 201b.

The method 500 may comprise, in step 501a, where the first user of the first UE 201a directs the first UE 201a to observe the environment 305 or the object 306 in the environment 305. To observe the environment 305 or the object 306 in the environment 305, the first UE 201a may transmit the second sensing signal.

The second sensing signal has been already described with reference to the embodiment of the methods 100a, 100b described in figures 1a and 1b. Preferably, in this embodiment, the second sensing signal does not include the information about the identity of the first UE 201a.

The method 500 may comprise step 502a, where the first UE 201a may transmit the second broadcast signal, as an embodiment of step 102a of method 100a. The second broadcast signal may comprise information about the identity of the first UE 201a. The second broadcast signal may comprise information to indicate that the first UE 201a is observing the environment 305 or the object 306 in the environment 305.

The second broadcast signal has been already described with reference to the embodiment of the methods 100a, 100b described in figures 1a and 1b.

In parallel or in sequence to the above steps of 501a, 502a performed by the first UE 201a, the second UE 201b may perform similar steps such 501b, 502b.

The method 500 may comprise, in step 501b, where the second user of the second UE 201b directs the second UE 201b to observe the environment 305 or the object 306 in the environment 305. The environment and/or the object are the same environment and/or object observed by the first UE 201a. To observe the environment 305 or the object 306 in the environment 305, the second UE 201b may transmit the first sensing signal.

The first sensing signal has been already described with reference to the embodiment of the methods 100a, 100b described in figures 1a and 1b. Preferably, in this embodiment, the first sensing signal does not include the information about the identity of the second UE 201b.

The method 500 may comprise step 502b, where the second UE 201b may transmit the first broadcast signal, as an embodiment of step 101b of the method 100b. The first broadcast signal may comprise information about the identity of the second UE 201b. The first broadcast signal may comprise information to indicate that the second UE 201b is observing the environment 305 or the object 306 in the environment 305.

The first broadcast signal has been already described with reference to the embodiment of the methods 100a, 100b described in figures 1a and 1b.

The method 500 may comprise step 503b, where the first UE 201a may receive the first broadcast signal transmitted by the second UE 201b, as an embodiment of step 103a of the method 100a. Upon receiving the first broadcast signal, the first UE 201a may, in step 504a, determine the identity of the second UE 201b comprised in the received first broadcast signal, as an embodiment of step 104a of the method 100a. Based on the information indicating that the second UE 201b is observing the environment 305 or the object 306 in the environment 305 and the information about the identity of the second UE 201b, the first UE may want to set up a collaborating sensing process with the identified second UE 201b.

The method 500 may comprise, in step 505a, the first UE 201a sending to the first user information that there is a possibility to participate in the collaborative sensing process with the identified second UE 201b. Upon receiving an acceptance from the first user in step 506a, the first UE 201a may transmit the second signal, in step 507a as an embodiment of the step 105a of method 100a, to the second UE 201b to request the second UE 201b to participate in the collaborative sensing process with the first UE 201a.

The method 500 may comprise, in step 508b as an embodiment of the step 102b of the method 100b, where the second UE 201b receives the second signal transmitted by the first UE 201a. The second signal has been already described with reference to the embodiment of the methods 100a, 100b described in figures 1a and 1b.

The method 500 may comprise, in step 509b, the second UE 201b sending to the first user information that there is a possibility to participate in the collaborative sensing process with the identified second UE 201b.. Upon receiving an acceptance from the second user in step 510b, an embodiment of the step 103b of the method 100b, the collaborative sensing process can be set up between the first UE 201a and the second UE 201b in step 511, an embodiment of steps 106a and 104b of methods 100a and 100b respectively During the collaborative sensing process, the first UE 201a and the second UE 201b may observe the environment 305 or the object 306 in the environment 305 together.

In an embodiment, setting up the collaborative sensing process may comprise determining characteristics of the first sensing signal to be used by the second UE 201b during the collaborative sensing process between the first UE 201a and the second UE 201b. In an embodiment, setting up the collaborative sensing process may comprise determining the characteristics of the second sensing signal to be used by the first UE 201a during the collaborative sensing process between the first UE 201a and the second UE 201b.

Determining the parameters of the first sensing signal may comprise determining parameters of the first sensing signal that are different from the parameters of the second sensing signal. Determining the parameters of the second sensing signal may comprise determining parameters of the second sensing signal that are different from the parameters of the first sensing signal.

For example, the first UE 201a may determine that the second light signal can be of the wavelength 701 nm whereas the second UE 201b may determine the first light signal can be of the wavelength 702 nm. When observing together, the first UE 201a may transmit the second light signal of wavelength 701 nm and receive a reflection of the second light signal. When observing together, the second UE 201b may transmit the first light signal of wavelength 702 nm and receive a reflection of the first light signal. As the wavelength of the first light signal is different from the wavelength of the second light signal, the second UE 201b can be prevented from receiving the second light signal transmitted by the first UE 201a and the vice versa.

In an embodiment, setting up the collaborative sensing process may further comprise determining transmission time slots that first UE 201a may use to transmit second sensing signals. In an embodiment, setting up the collaborative sensing process may further comprise determining the transmission time slots that the second UE 201b may use to transmit the first sensing signals. For example, the first UE 201a may determine to use a timeslot (t0) of duration one millisecond for the transmission of the second sensing signal during the collaborative sensing process. The second UE 201b may determine not to transmit the first sensing signal during the timeslot t0. The second UE 201b may determine to use a timeslot (t1) of duration one millisecond for the transmission of the first sensing signal during the collaborative sensing process. The first UE 201a may determine not to transmit the second sensing signal during the timeslot t1. By transmitting the first sensing signal and the second sensing signal during different time slots, the first UE 201a may avoid receiving the first sensing signal and the reflection of the first sensing signal, and the second UE 201b may avoid receiving the second sensing signal and the reflection of the second sensing signal.

The method 500 may comprise repetition of steps 512, 513, 514a, 514b, 515. The method 500 may comprise, in step 512, sharing of observations between the first UE 201a and the second UE 201b. The method 500 may comprise, in step 513, sharing of observation results between the first UE 201a and the second UE 201b. Sharing of observations and/or sharing of observation results may comprise the collaborative sensing process. The method 500 may comprise, in step 514a, updating the first user of the first UE 201a with the progress of steps 512 and/or 513. The method 500 may comprise, in step 514b, updating the second user of the second UE 201b with the progress of steps 512 and/or 513. The method 500 may comprise a termination step 515. In the termination step, the first user of the first UE 201a and the second user of the second UE 201b may agree to end the collaborative sensing process, the collaborative sensing process may be end between the first UE 201a and the second UE 201b in step 516.

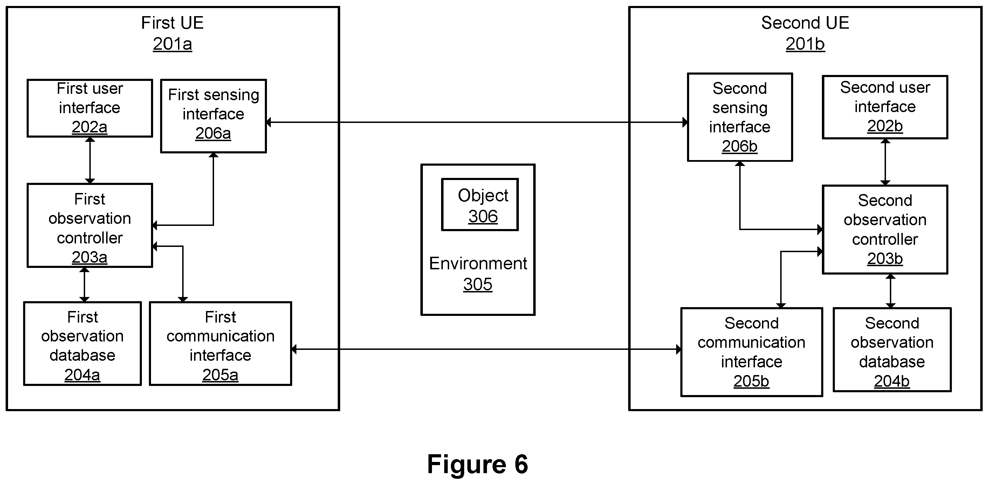

Figure 6 shows the first UE 201a and the second UE 201b. The first UE 201a comprises the first sensing interface 206a. Possible sensing interfaces have been already described above with reference to the description of a generic UE. In some embodiments, the first sensing interface 206a may enable the first UE 201a to transmit the second sensing signal. For example, if the second sensing signal comprises or is the second light signal, the first sensing interface 206a may comprise LIDAR equipment to transmit the second light signal. The second light signal may comprise information about the identity of the first UE 201a. For example, if the second sensing signal comprises or is the second radio signal, the first sensing interface 206a may comprise RADAR equipment to transmit the second radio signal. The second radio signal may comprise information about the identity of the first UE 201a.

The second UE 201b may comprise a second sensing interface 206b. Possible sensing interfaces have been already described above with reference to the description of a generic UE. In some embodiments, the second sensing interface 206b may enable the second UE 201b to transmit the first sensing signal. For example, if the first sensing signal comprises or is the first light signal, the second sensing interface 206b may comprise LIDAR equipment to transmit the first light signal. The first light signal may comprise information about the identity of the second UE 201b. For example, if the first sensing signal comprises or is the first radio signal, the second sensing interface 206b may comprise RADAR equipment to transmit the first radio signal. The first radio signal may comprise information about the identity of the second UE 201b.

In some embodiments, the first sensing interface 206a may enable the first UE 201a to receive the first sensing signal. For example, if the first sensing signal comprises or is the first light signal, the first sensing interface 206a may comprise LIDAR equipment to receive the first light signal. The first light signal may comprise information about the identity of the second UE 201b. For example, if the first sensing signal comprises or is the first radio signal, the first sensing interface 206a may comprise RADAR equipment to receive the first radio signal. The first radio signal may comprise information about the identity of the second UE 201b.

The first UE 201a may comprise the first communication interface 205a. In some embodiments, the first communication interface 205a may enable the first UE 201a to transmit the second broadcast signal.

The second UE 201b may comprise a second communication interface 205b. In some embodiments, the second communication interface 205b may enable the second UE 201b to transmit the first broadcast signal.

Possible communication interfaces applicable to the first UE or the second UE have been already described above with reference to the description of a generic UE.

In some embodiments, the first communication interface 205a may enable the first UE 201a to receive the first broadcast signal.

In some embodiments, the first communication interface 205a may enable the first UE 201a to transmit the second signal. In some embodiments, the second communication interface 206a may enable the second UE 201b to receive the second signal transmit by the first UE 201a.

The first communication interface 205a and the second communication interface 205b may enable the first UE 201a and the second UE 201b, respectively, to communicate with one another during the setup of the collaborative sensing process. The first communication interface 205a and the second communication interface 205b may enable the first UE 201a and the second UE 201b, respectively, to share observations with one another during the collaborative sensing process. The first communication interface 205a and the second communication interface 205b may enable the first UE 201a and the second UE 201b, respectively, to share observation results with one another during the collaborative sensing process.

The first UE 201a may comprise the first observation controller 203a. In an embodiment, the first observation controller 203a of the first UE 201a communicates with the first sensing interface 206a of the first UE 201a via a first encoder 301a. As shown in Figure 3, the first observation controller 203a of the first UE 201a may transmit the information about the identity of the first UE 201a to the first encoder 301a. The first encoder 301a of the first UE 201a may encode the information about the identity of the first UE 201a to the second sensing signal that is to be transmitted by the first sensing interface 206a of the first UE 201a.

The second UE 201b may comprise a second observation controller 203b. The second observation controller 203b may comprise a processing circuitry. The second observation controller 203b may comprise one or more microprocessors. The second observation controller 203b may control the second sensing interface 206b and the second communication interface 205b. In an embodiment, the second observation controller 203b may encode the information about the identity of the second UE 201b to the first sensing signal before transmitting the first sensing signal.

As shown in Figure 3, the first UE 201a may comprise a first decoder 302a. In an embodiment, the first decoder 302a of the first UE 201a may decode the information about the identity of the second UE 201b encoded in the received first sensing signal from the second UE 201b. The first decoder 302a of the first UE 201a may transmit the decoded information about the identity of the second UE 201b to the first observation controller 203a of the first UE 201a. The observation controller 203a of the first UE 201a may determine the identity of the second UE 201b from the received decoded information about the identity of the second UE 201b. In an embodiment, the first observation controller may determine the identity of the second UE 201b comprised in the received first broadcast signal.

As shown in Figure 6, the second UE 201b may comprise a second user interface 202b. The second user interface 202b of the second UE 201b may include one or more of a screen, a touch screen, buttons, voice control, or other type of interface that enables the second user to interact with the second UE 201b.

The second UE 201b may comprise a second observation database 204b. The second observation database 204b of the second UE 201b may store the observations and/or observation results that can be shared between the first UE 201a and the second UE 201b during the collaborative sensing process.

Figure 7 illustrates an embodiment of the invention wherein the observer 200 is the communication network node 700. Figure 7 is a flow chart illustrating process steps of method 701, an embodiment of the method 100a, performed by the first UE 201a for setting up a collaborative sensing process with the communication network node 700. Figure 8 shows the first UE 201a and the communication network node 700.

The first UE 201a may be observing an environment 305 or an object 306 in an environment 305. The first UE 201a may transmit sensing signals to observe an environment 305 or an object 306 in an environment 305.

The method 701 may comprise, in step 702, the communication network node 700 transmitting a system information signal, as an embodiment of step 101b of method 100b. The system information signal may comprise information about the identity of the communication network node 700. The system information signal may comprise information that observation is performed by the communication network node 700.

The method 701 may comprise, in step 703, the first UE 201a receiving the system information signal, as an embodiment of step 103a of the method 100a, comprising information about the identity of the communication network node.. The first communication interface 205a of the first UE 201a may enable the first UE 201a to receive the system information signal 701 transmitted by the communication network node 700.

The system information signal has been already described with reference to the embodiment of the methods 100a, 100b described in figures 1a and 1b.

The method 701 may comprise, in step 704, the first UE 201a determining the identity of the communication network node 700 from the information about the identity of the communication network node 700 comprised in the received system information signal, as an embodiment of the 104a of the method 100a. The first observation controller 203a may enable the first UE 201a to determine the identity of the communication network node 700 from the information about the identity of the communication network node 700 comprised in the received system information signal.

The method 701 may comprise, in step 705, the first UE 201a sending to the first user, information that there is a possibility to participate in the collaborative sensing process with the identified communication network node 700.. The first observation controller 203a of the first UE 201a may enable the first UE 201a to send, using the first user interface 202a, the first user information that there is a possibility to participate in the collaborative sensing process with the identified communication network node 700. The method 701 may comprise, in step 706, the first user of the first UE 201a accepting to participate in the collaborative sensing process with the communication network node 700 via the first user interface 202a. The first observation controller 203a of the first UE 201a may enable the first UE 201a to transmit the second signal in step 707, as an embodiment of step 105a of the method 100a, to the identified communication network node 700 to participate in the collaborative sensing process. The second signal is transmitted by the first communication interface 205a of the first UE 201a.

The method 701 may comprise, in step 708, the communication network node 700 receiving the second signal, as an embodiment of the step 102b of method 100b.

The method 701 may comprise, in step 709, the communication network node 700 accepting to participate in the collaborative sensing process with the first UE 201a, as an embodiment of step 103b of method 100b.

In step 710, a collaborative sensing process between the first UE 201a and the communication network node 700 is set up, as an embodiment of steps 106a and 104b of the methods 100a and 100b respectively.

The method 701 may comprise repetition of steps 711, 712, and 713. The method 701 may comprise, in step 711, sharing of observations between the first UE 201a and the communication network node 700. The method 701 may comprise, in step 712, sharing of observation results between the first UE 201a and the communication network node 700. Sharing of observations and/or sharing of observation results may comprise the collaborative sensing process. The method 701 may comprise, in step 713, updating the first user of the first UE 201a with the progress of steps 711 and/or 712.

The method 701 may comprise a termination step 714. In the termination step, the first user of the first UE 201a and the communication network node 700 may agree to end the collaborative sensing process, the collaborative sensing process may be end between the first UE 201a and the communication network node 700 in step 714.

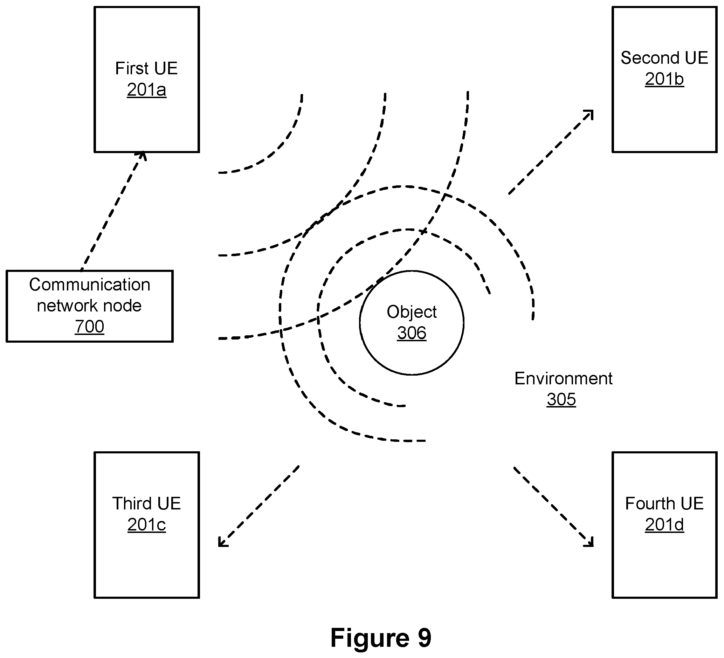

Figure 9 shows an example of multiple UEs participating in a collaborative sensing process. For example, the first UE 201a may set up a collaborative sensing process with the second UE 201b based one or more embodiments of the method 100a. Similarly, the first UE 201a may simultaneously set up a collaborative sensing process with a third UE 201c and/or a fourth UE 201d and /or the communication network node 700.

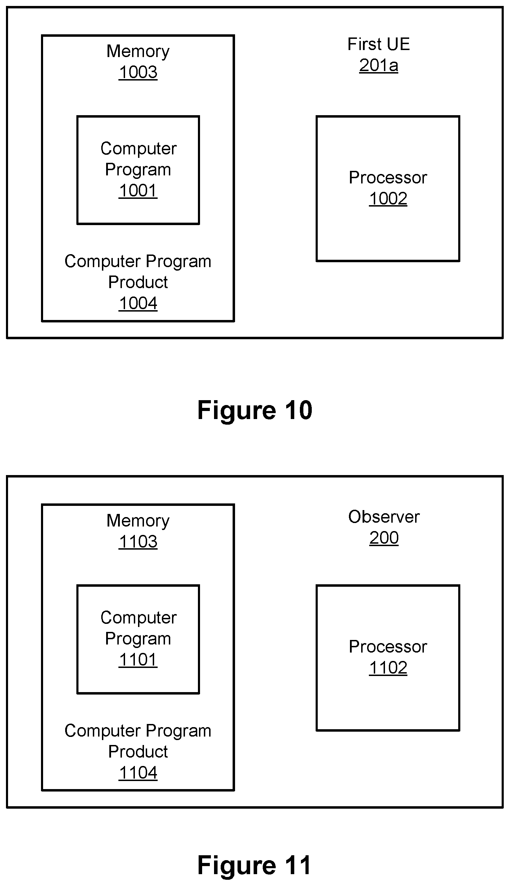

Figure 10 depicts the first UE 201a. The first UE 201a comprises a processor 1002. The first UE 201a may comprise one or more processors. The first UE 201a comprises a computer program 1001 comprising computer-executable instructions. The first UE 201a comprises a memory 1003 to store the computer program 1001 comprising computer-executable instructions. The computer program 1001 comprising the computer-executable instructions is executed on the processor 1002 comprised in the first UE 201a causing the first UE 201a to perform a method according to the invention for setting up the collaborative sensing process with the observer 200. The computer program 1001 comprising the computer-executable instructions is executed on the processor 1002 comprised in the first UE 201a causing the first UE 201a to perform a method according to one or more embodiments of the invention for setting up the collaborative sensing process with the observer 200. The computer program 1001 comprising the computer-executable instructions may be loaded from a memory 1003 and executed by the processor 1002 comprised in the first UE 201a causing the first UE 201a to perform the method according to the invention for setting up the collaborative sensing process with the observer 200. The computer program 1001 comprising the computer-executable instructions may be loaded from the memory 1003 comprised in the first UE 201a and executed by the processor 1002 comprised in the first UE 201a causing the first UE 201a to perform a method according to one or more embodiments of the invention for setting up the collaborative sensing process with the observer 200. Figure 11 depicts the observer 200. The observer comprises a processor 1102. The observer 200 may comprise one or more processors. The observer 200 comprises a computer program 1101 comprising computer-executable instructions. The observer 200 comprises a memory 1103 to store the computer program 1101 comprising computer-executable instructions. The computer program 1101 comprising the computer-executable instructions is executed on the processor 1102 comprised in the observer 200 causing the observer 200 to perform the method according to the invention for setting up the collaborative sensing process with the first UE 201a. The computer program 1101 comprising the computer-executable instructions is executed on the processor 1102 comprised in the observer 200 causing the observer 200 to perform a method according to one or more embodiments of the invention for setting up the collaborative sensing process with the first UE 201a. The computer program comprising the computer-executable instructions may be loaded from a memory 1103 and executed by the processor 1102 comprised in the observer 200 causing the observer 200 to perform the method according to the invention for setting up the collaborative sensing process with the first UE 201a. The computer program 1101 comprising the computer-executable instructions may be loaded from the memory 1103 comprised in the observer 200 and executed by the processor 1102 comprised in the observer 200 causing the observer 200 to perform a method according to one or more embodiments of the invention for setting up the collaborative sensing process with the first UE 201a.

It is to be understood that the singular form "a," "an," and "the" include plural referents unless the context clearly dictates otherwise. It will be further understood that the terms, "comprises" "comprising", "includes" and/or "including" when used herein, specify the presence of stated features, integers, steps, operations, elements, and/or components, but do not preclude the presence or addition of one or more other features, integers, steps, operations, elements, components, and/or groups thereof.

While various embodiments of the present disclosure are described, it should be understood that they have been presented by the way of example only, and not limitations. Thus, the breadth and scope of the present disclosure should not be limited by any of the above-described exemplary embodiments. Moreover, any combination of the above-described elements in all possible variations thereof is comprised by the disclosure unless otherwise indicated herein or otherwise clearly contradicted by context. Additionally, while the processes described above and illustrated in the drawings are shown as a sequence of steps this was done for the sake of illustration. It is contemplated that some steps may be added, some steps omitted, the order of the steps may be re-arranged, and some steps may be performed in parallel.

## Claims

1. A method performed by a first user equipment, first UE (201a), for setting up a collaborative sensing process with an observer (200), an entity comprising a sensing interface, sensing an environment (305) or an object (306) in the environment (305), the method comprising:
receiving (103a) a first signal from the observer, wherein the first signal includes a first sensing signal, used by the observer (200) to sense the environment (305) or the object (306) in the environment (305) and the first sensing signal comprises information about the identity of the observer (200); determining (104a) the identity of the observer (200) from the information about the identity of the observer (200) comprised in the received first signal; transmitting (105a) a second signal to the observer (200) for requesting the observer (200) to participate in the collaborative sensing process; and
setting up (106a) the collaborative sensing process upon agreement from the observer (200), wherein the setting up (106a) comprises establishing one or more communication channels between the first UE (201a) and the observer (200).

2. The method according to one or more of the preceding claims, wherein the first signal comprises a first broadcast signal.

3. The method according to claim 2, wherein the first broadcasting signal comprises information about the identity of the observer (200).

4. The method according to claim 2, wherein the first signal comprises the first sensing signal and the first broadcasting signal comprising information about the identity of the observer.

5. The method according to one or more of the preceding claims, wherein setting up (106a) the collaborative sensing process upon agreement from the observer (200) comprises one or more of the following:
using a common protocol in the communications between first UE (201a) and the observer (200);
exchanging one or more parameters, with the observer (200), required for setting up the collaborative sensing process with the observer (200);
sending an encryption key to the observer (200).

6. The method according to one or more of the preceding claims, wherein the observer is a second UE (201b).

7. The method according to one or more of the preceding claims, including sensing the environment (305) or the object (306) in the environment (305) and wherein sensing the environment (305) or the object (306) in the environment (305) includes transmitting a second sensing signal to the observer (200) or transmitting a second broadcast signal to the observer (200).

8. The method according to claim 6, wherein the second sensing signal or the second broadcast signal comprises information about an identity of the first UE (201a).

9. The method according to claim 7, comprising encoding information about the identity of the first UE (201a) in the second sensing signal or the second broadcasting signal.

10. The method according to claim 9, wherein encoding information comprises encoding information using one of on-off keying, OOK, amplitude-shift keying, ASK, or frequency-shift keying, FSK, mechanisms.

11. The method according to one or more of the preceding claims, comprising:
comparing the determined identity of the observer (200) with an identity of the first UE (201a) to determine that the observer (200) is not the first UE (201a).

12. The method according to one or more of the preceding claims, wherein setting up (106a) the collaborative sensing process upon agreement from the observer (200) comprises one or more of the following:
determining parameters of the second sensing signal to be used during the collaborative sensing process between the first UE (201a) and the observer (200) wherein parameters of the second sensing signal comprise one or more of: wavelength of the second sensing signal, frequency of the second sensing signal and power of the second sensing signal;
determining transmission time slots to be used by the first UE 201a during the collaborative sensing process between the first UE (201a) and the observer (200).

13. The method according to one or more of the preceding claims when dependent on claim 7, wherein information about the identity of the first UE (201a) comprises an identifier of the first UE (201a) or a part or whole of an output obtained by inputting the identifier of the first UE (201a) to a one-way hash function.

14. The method according to one or more of the preceding claims when dependent on claim 7, wherein the identifier of the first UE (201a) comprises an International Mobile Equipment Identity, IMEI, number of the first UE (201a) or a Media Access Control, MAC, address of the first UE (201a).

15. The method according to one or more of the preceding claims when dependent on claim 7 , wherein the identifier of the first UE (201a) comprises an identifier of the first UE (201a) that is newly created upon every reboot of the first UE (201a) or an identifier that is newly created by the first UE (201a) for every collaborative sensing process that the first UE (201a) sets up.

16. A method performed by an observer (200), an entity comprising a sensing interface, observing an environment (305) or an object (306) in the environment (305), for setting up a collaborative sensing process with a first UE (201a), the method comprising:
transmitting (101b) a first signal to the first UE (201a), wherein the first signal includes a first sensing signal, used by the observer (200) to sense the environment (305) or the object (306) in the environment (305) and the first sensing signal comprises information about the identity of the observer (200); receiving (102b) a second signal from the first UE (201a) wherein the second signal includes a request to participate in the collaborative sensing process with the first UE (201a);
accepting (103b) to participate in the collaborative sensing process with the first UE (201a); and
setting up (104b) the collaborative sensing process with the first UE (201a), wherein the setting up (104b) comprises establishing one or more communication channels between the first UE (201a) and the observer (200).

17. A first user equipment, UE (201a), for setting up a collaborative sensing process with an observer (200), an entity comprising a sensing interface, observing an environment (305) or an object (306) in the environment (305), the first UE (201a) being configured for:
receiving (103a) a first signal from the observer, wherein the first signal includes a first sensing signal, used by the observer (200) to sense the environment (305) or the object (306) in the environment (305) and the first sensing signal comprises information about the identity of the observer (200); determining (104a) the identity of the observer from the information about the identity of the observer comprised in the received first signal;
transmitting (105a) a second signal to the identified observer for requesting the identified observer to participate in the collaborative sensing process; and
setting up (106a) the collaborative sensing process upon agreement from the identified observer, wherein the setting up (106a) comprises establishing one or more communication channels between the first UE (201a) and the observer (200).

18. The first UE (201a) according to claim 17, being configured to perform a method according any of the claims 2 to 15.

19. An observer (200), an entity comprising a sensing interface, observing an environment (305) or an object (306) in the environment (305), for setting up a collaborative sensing process with a first UE (201a), the observer (200) being configured for:
transmitting (101b) a first signal to the first UE (201a), wherein the first signal includes a first sensing signal, used by the observer (200) to sense the environment (305) or the object (306) in the environment (305) and the first sensing signal comprises information about the identity of the observer (200);
receiving (102b) a second signal from the first UE (201a) wherein the second signal is for requesting the observer (200) to participate in the collaborative sensing process with the first UE (201a);
accepting (103b) to participate in the collaborative sensing process with the first UE (201a); and
setting up (104b) the collaborative sensing process with the first UE (201a),
wherein the setting up (104b) comprises establishing one or more communication channels between the first UE (201a) and the observer (200).

20. A computer program (1001), comprising instructions which when run on a processor (1002) of a first UE (201a), causes the first UE (201a) to perform a method according to any one of claims 1-15.

21. A computer program product (1004) which comprises a computer readable storage medium on which a computer program according to claim 20 is stored.

22. A computer program (1101), comprising instructions which when run on a processor (1102) belonging to an observer (200), causes the observer (200) to perform a method according to claim 16.

23. A computer program product (1104) which comprises a computer readable storage medium on which a computer program according to claim 22 is stored.

## Patentansprüche

1. Verfahren, das von einer ersten Benutzereinrichtung, ersten UE, (201a) durchgeführt wird, zur Einrichtung eines kollaborativen Erfassungsprozesses mit einem Beobachter (200), einer Entität mit einer Erfassungsschnittstelle, der eine Umgebung (305) oder ein Objekt (306) in der Umgebung (305) erfasst, wobei das Verfahren Folgendes umfasst:
Empfangen (103a) eines ersten Signals von dem Beobachter, wobei das erste Signal ein erstes Erfassungssignal umfasst, das von dem Beobachter (200) verwendet wird, um die Umgebung (305) oder das Objekt (306) in der Umgebung (305) zu erfassen, und das erste Erfassungssignal Informationen über die Identität des Beobachters (200) umfasst;
Bestimmen (104a) der Identität des Beobachters (200) aus den Informationen über die Identität des Beobachters (200), die in dem empfangenen ersten Sigal umfasst sind;
Senden (105a) eines zweiten Signals an den Beobachter (200), um den Beobachter (200) aufzufordern, an dem kollaborativen Erfassungsprozess teilzunehmen; und
Einrichten (106a) des kollaborativen Erfassungsprozesses nach Zustimmung des Beobachters (200), wobei das Einrichten (106a) Aufbauen eines oder mehrerer Kommunikationskanäle zwischen der ersten UE (201a) und dem Beobachter (200) umfasst.

2. Verfahren nach einem oder mehreren der vorhergehenden Ansprüche, wobei das erste Signal ein Broadcast-Signal umfasst.

3. Verfahren nach Anspruch 2, wobei das erste Broadcast-Signal Informationen über die Identität des Beobachters (200) umfasst.

4. Verfahren nach Anspruch 2, wobei das erste Signal das erste Erfassungssignal umfasst und das erste Broadcast-Signal Informationen über die Identität des Beobachters umfasst.

5. Verfahren nach einem oder mehreren der vorhergehenden Ansprüche, wobei das Einrichten (106a) des kollaborativen Erfassungsprozesses nach Zustimmung des Beobachters (200) eines oder mehreres von Folgendem umfasst:
Verwenden eines gemeinsamen Protokolls in den Kommunikationen zwischen der ersten UE (201a) und dem Beobachter (200);
Austauschen eines oder mehrerer Parameter mit dem Beobachter (200), die zum Einrichten des kollaborativen Erfassungsprozess mit dem Beobachter (200) erforderlich sind;
Senden eines Verschlüsselungsschlüssels an den Beobachter (200).

6. Verfahren nach einem oder mehreren der vorhergehenden Ansprüche, wobei der Beobachter eine zweite UE (201b) ist.

7. Verfahren nach einem oder mehreren der vorhergehenden Ansprüche, umfassend Erfassen der Umgebung (305) oder des Objekts (306) in der Umgebung (305) und wobei das Erfassen der Umgebung (305) oder des Objekts (306) in der Umgebung (305) Senden eines zweiten Erfassungssignals an den Beobachter (200) oder Senden eines zweiten Broadcast-Signals an den Beobachter (200) umfasst.

8. Verfahren nach Anspruch 6, wobei das zweite Erfassungssignal oder das zweite Broadcast-Signal Informationen über eine Identität der ersten UE (201a) umfasst.

9. Verfahren nach Anspruch 7, umfassend Codieren von Informationen über die Identität der ersten UE (201a) in dem zweiten Erfassungssignal oder dem zweiten Broadcast-Signal.

10. Verfahren nach Anspruch 9, wobei das Codieren von Informationen Codieren von Informationen unter Verwendung eines von einem Ein-/Aus-Tastungs-,OOK-, einem Amplitudentastungs-,ASK-, oder einem Frequenztastungs-,FSK-,Mechanismus umfasst.

11. Verfahren nach einem der vorhergehenden Ansprüche, umfassend:
Vergleichen der bestimmten Identität des Beobachters (200) mit einer Identität der ersten UE (201a), um zu bestimmen, dass der Beobachter (200) nicht die erste UE (201a) ist.

12. Verfahren nach einem oder mehreren der vorhergehenden Ansprüche, wobei das Einrichten (106a) des kollaborativen Erfassungsprozesses nach Zustimmung des Beobachters (200) eines oder mehreres von Folgendem umfasst:
Bestimmen von Parametern des zweiten Erfassungssignals, die während des kollaborativen Erfassungsprozesses zwischen der ersten UE (201a) und dem Beobachter (200) verwendet werden sollen, wobei die Parameter des zweiten Erfassungssignals eines oder mehrere von Folgenden umfassen: Wellenlänge des zweiten Erfassungssignals, Frequenz des zweiten Erfassungssignals und Leistung des zweiten Erfassungssignals;
Bestimmen von Sendezeitschlitzen, die von der ersten UE (201a) während des kollaborativen Erfassungsprozesses zwischen der ersten UE (201a) und dem Beobachter (200) verwendet werden sollen.

13. Verfahren nach einem oder mehreren der vorhergehenden Ansprüche, wenn abhängig von Anspruch 7, wobei Informationen über die Identität der ersten UE (201a) eine Kennung der ersten UE (201a) oder einen Teil oder die Gesamtheit einer Ausgabe umfassen, die durch Eingeben der Kennung der ersten UE (201a) in eine Einweg-Hash-Funktion erhalten wird.

14. Verfahren nach einem oder mehreren der vorhergehenden Ansprüche, wenn abhängig von Anspruch 7, wobei die Kennung der ersten UE (201a) eine Nummer einer internationalen Mobilgerätekennung, IMEI, der ersten UE (201a) oder eine Medienzugriffsteuerungsadresse, MAC-Adresse, der ersten UE (201a) umfasst.

15. Verfahren nach einem oder mehreren der vorhergehenden Ansprüche, wenn abhängig von Anspruch 7, wobei die Kennung der ersten UE (201a) eine Kennung der ersten UE (201a), die bei jedem Neustart der ersten UE (201a) neu erzeugt wird, oder eine Kennung umfasst, die von der ersten UE (201a) für jeden kollaborativen Erfassungsprozess, den die erste UE (201a) einrichtet, neu erzeugt wird.

16. Verfahren, das von einem Beobachter (200), einer Entität, die eine Erfassungsschnittstelle umfasst, durchgeführt wird, der eine Umgebung (305) oder ein Objekt (306) in der Umgebung (305) beobachtet, zur Einrichtung eines kollaborativen Erfassungsprozesses mit einer ersten UE (201a), wobei das Verfahren Folgendes umfasst:
Senden (101b) eines ersten Signals an die erste UE (201a), wobei das erste Signal ein erstes Erfassungssignal umfasst, das von dem Beobachter (200) verwendet wird, um die Umgebung (305) oder das Objekt (306) in der Umgebung (305) zu erfassen, und das erste Erfassungssignal Informationen über die Identität des Beobachters (200) umfasst;
Empfangen (102b) eines zweiten Signals von der ersten UE (201a), wobei das zweite Signal eine Aufforderung zum Teilnehmen an dem kollaborativen Erfassungsprozess mit der ersten UE (201a) umfasst;
Akzeptieren (103b), an dem kollaborativen Erfassungsprozess mit der UE (201a) teilzunehmen; und
Einrichten (104b) des kollaborativen Erfassungsprozesses mit der ersten UE (201a), wobei das Einrichten (104b) Aufbauen eines oder mehrerer Kommunikationskanäle zwischen der ersten UE (201a) und dem Beobachter (200) umfasst.

17. Erste Benutzereinrichtung, UE, (201a) zum Einrichten eines kollaborativen Erfassungsprozesses mit einem Beobachter (200), einer Entität mit einer Erfassungsschnittstelle, der eine Umgebung (305) oder ein Objekt (306) in der Umgebung (305) beobachtet, wobei die erste UE (201a) zu Folgendem konfiguriert ist:
Empfangen (103a) eines ersten Signals von dem Beobachter, wobei das erste Signal ein erstes Erfassungssignal umfasst, das von dem Beobachter (200) verwendet wird, um die Umgebung (305) oder das Objekt (306) in der Umgebung (305) zu erfassen, und das erste Erfassungssignal Informationen über die Identität des Beobachters (200) umfasst;
Bestimmen (104a) der Identität des Beobachters aus den Informationen über die Identität des Beobachters, die in dem empfangenen ersten Sigal umfasst sind;
Senden (105a) eines zweiten Signals an den identifizierten Beobachter, um den identifizierten Beobachter aufzufordern, an dem kollaborativen Erfassungsprozess teilzunehmen; und
Einrichten (106a) des kollaborativen Erfassungsprozesses nach Zustimmung des identifizierten Beobachters, wobei das Einrichten (106a) Aufbauen eines oder mehrerer Kommunikationskanäle zwischen der ersten UE (201a) und dem Beobachter (200) umfasst.

18. Erste UE (201a) nach Anspruch 17, die dazu konfiguriert ist, ein Verfahren nach einem der Ansprüche 2 bis 15 durchzuführen.

19. Beobachter (200), Entität, die eine Erfassungsschnittstelle umfasst, der eine Umgebung (305) oder ein Objekt (306) in der Umgebung (305) beobachtet, zum Einrichten eines kollaborativen Erfassungsprozesses mit einer ersten UE (201a), wobei der Beobachter (200) zu Folgendem konfiguriert ist:
Senden (101b) eines ersten Signals an die erste UE (201a), wobei das erste Signal ein erstes Erfassungssignal umfasst, das von dem Beobachter (200) verwendet wird, um die Umgebung (305) oder das Objekt (306) in der Umgebung (305) zu erfassen, und das erste Erfassungssignal Informationen über die Identität des Beobachters (200) umfasst;
Empfangen (102b) eines zweiten Signals von der ersten UE (201a), wobei das zweite Signal dazu dient, den Beobachter (200) aufzufordern, an dem kollaborativen Erfassungsprozess mit der ersten UE (201a) teilzunehmen;
Akzeptieren (103b), an dem kollaborativen Erfassungsprozess mit der UE (201a) teilzunehmen; und
Einrichten (104b) des kollaborativen Erfassungsprozesses mit der ersten UE (201a), wobei das Einrichten (104b) Aufbauen eines oder mehrerer Kommunikationskanäle zwischen der ersten UE (201a) und dem Beobachter (200) umfasst.

20. Computerprogramm (1001), umfassend Anweisungen, die bei Ausführung auf einem Prozessor (1002) einer ersten UE (201a) die erste UE (201a) zum Durchführen eines Verfahrens nach einem der Ansprüche 1-15 veranlassen.

21. Computerprogrammprodukt (1004), das ein computerlesbares Speichermedium umfasst, auf dem ein Computerprogramm nach Anspruch 20 gespeichert ist.

22. Computerprogramm (1101), umfassend Anweisungen, die bei Ausführung auf einem Prozessor (1102) eines Beobachters (200) den Beobachter (200) zum Durchführen eines Verfahrens nach Anspruch 16 veranlassen.

23. Computerprogrammprodukt (1104), das ein computerlesbares Speichermedium umfasst, auf dem ein Computerprogramm nach Anspruch 22 gespeichert ist.

## Revendications

1. Procédé réalisé par un premier équipement utilisateur, UE (201a), pour mettre en place un processus de détection collaborative avec un observateur (200), une entité comprenant une interface de détection, détectant un environnement (305) ou un objet (306) dans l'environnement (305), le procédé comprenant :
la réception (103a) d'un premier signal depuis l'observateur, dans lequel le premier signal inclut un premier signal de détection, utilisé par l'observateur (200) pour détecter l'environnement (305) ou l'objet (306) dans l'environnement (305) et le premier signal de détection comprend des informations relatives à l'identité de l'observateur (200) ;
la détermination (104a) de l'identité de l'observateur (200) à partir des informations relatives à l'identité de l'observateur (200) comprises dans le premier signal reçu ;
la transmission (105a) d'un deuxième signal à l'observateur (200) pour demander à l'observateur (200) de participer au processus de détection collaborative ; et
la mise en place (106a) du processus de détection collaborative en cas d'accord de l'observateur (200), dans lequel la mise en place (106a) comprend l'établissement d'un ou plusieurs canaux de communication entre le premier UE (201a) et l'observateur (200).

2. Procédé selon une ou plusieurs des revendications précédentes, dans lequel le premier signal comprend un premier signal de diffusion.

3. Procédé selon la revendication 2, dans lequel le premier signal de diffusion comprend des informations relatives à l'identité de l'observateur (200).

4. Procédé selon la revendication 2, dans lequel le premier signal comprend le premier signal de détection et le premier signal de diffusion comprenant des informations relatives à l'identité de l'observateur.

5. Procédé selon une ou plusieurs des revendications précédentes, dans lequel la mise en place (106a) du processus de détection collaborative en cas d'accord de l'observateur (200) comprend un ou plusieurs parmi :
l'utilisation d'un protocole commun dans les communications entre le premier UE (201a) et l'observateur (200) ;
l'échange d'un ou plusieurs paramètres, avec l'observateur (200), requis pour mettre en place le processus de détection collaborative avec l'observateur (200) ;
l'envoi d'une clé de chiffrement à l'observateur (200).

6. Procédé selon une ou plusieurs des revendications précédentes, dans lequel l'observateur est un deuxième UE (201b).

7. Procédé selon une ou plusieurs des revendications précédentes, incluant la détection de l'environnement (305) ou de l'objet (306) dans l'environnement (305) et dans lequel la détection de l'environnement (305) ou de l'objet (306) dans l'environnement (305) inclut la transmission d'un deuxième signal de détection à l'observateur (200) ou la transmission d'un deuxième signal de diffusion à l'observateur (200).

8. Procédé selon la revendication 6, dans lequel le deuxième signal de détection ou le deuxième signal de diffusion comprend des informations relatives à une identité du premier UE (201a).

9. Procédé selon la revendication 7, comprenant l'encodage d'informations relatives à l'identité du premier UE (201a) dans le deuxième signal de détection ou le deuxième signal de diffusion.

10. Procédé selon la revendication 9, dans lequel
l'encodage d'informations comprend l'encodage d'informations à l'aide de l'un de mécanismes de modulation tout ou rien, OOK, de modulation par déplacement d'amplitude, ASK, et de modulation par déplacement de fréquence, FSK.

11. Procédé selon une ou plusieurs des revendications précédentes, comprenant :
la comparaison de l'identité déterminée de l'observateur (200) à une identité du premier UE (201a) pour déterminer que l'observateur (200) n'est pas le premier UE (201a).

12. Procédé selon une ou plusieurs des revendications précédentes, dans lequel la mise en place (106a) du processus de détection collaborative en cas d'accord de l'observateur (200) comprend une ou plusieurs parmi :
la détermination de paramètres du deuxième signal de détection à utiliser au cours du processus de détection collaborative entre le premier UE (201a) et l'observateur (200), dans lequel des paramètres du deuxième signal de détection comprennent une ou plusieurs parmi : une longueur d'onde du deuxième signal de détection, une fréquence du deuxième signal de détection et une puissance du deuxième signal de détection ;
la détermination de créneaux de temps de transmission à utiliser par le premier UE (201a) au cours du processus de détection collaborative entre le premier UE (201a) et l'observateur (200).

13. Procédé selon une ou plusieurs des revendications précédentes lorsqu'elles dépendent de la revendication 7, dans lequel des informations relatives à l'identité du premier UE (201a) comprennent un identifiant du premier UE (201a) ou une partie ou l'intégralité d'une sortie obtenue par l'entrée de l'identifiant du premier UE (201a) dans une fonction de hachage unidirectionnelle.

14. Procédé selon une ou plusieurs des revendications précédentes lorsqu'elles dépendent de la revendication 7, dans lequel l'identifiant du premier UE (201a) comprend un numéro d'identité internationale d'équipement mobile, IMEI, du premier UE (201a) ou une adresse de commande d'accès au support, MAC, du premier UE (201a).

15. Procédé selon une ou plusieurs des revendications précédentes lorsqu'elles dépendent de la revendication 7, dans lequel l'identifiant du premier UE (201a) comprend un identifiant du premier UE (201a) qui est nouvellement créé à chaque redémarrage du premier UE (201a) ou un identifiant qui est nouvellement créé par le premier UE (201a) pour chaque processus de détection collaborative que le premier UE (201a) met en place.

16. Procédé réalisé par un observateur (200), une entité comprenant une interface de détection, détectant un environnement (305) ou un objet (306) dans l'environnement (305), pour mettre en place un processus de détection collaborative avec un premier UE (201a), le procédé comprenant :
la transmission (101b) d'un premier signal au premier UE (201a), dans lequel le premier signal inclut un premier signal de détection, utilisé par l'observateur (200) pour détecter l'environnement (305) ou l'objet (306) dans l'environnement (305) et le premier signal de détection comprend des informations relatives à l'identité de l'observateur (200) ;
la réception (102b) d'un deuxième signal depuis le premier UE (201a), dans lequel le deuxième signal inclut une demande de participation au processus de détection collaborative avec le premier UE (201a) ;
l'acceptation (103b) de participer au processus de détection collaborative avec le premier UE (201a) ; et
la mise en place (104b) du processus de détection collaborative avec le premier UE (201a), dans lequel la mise en place (104b) comprend l'établissement d'un ou plusieurs canaux de communication entre le premier UE (201a) et l'observateur (200).

17. Premier équipement utilisateur, UE (201a), pour mettre en place un processus de détection collaborative avec un observateur (200), une entité comprenant une interface de détection, observant un environnement (305) ou un objet (306) dans l'environnement (305), le premier UE (201a) étant configuré pour :
recevoir (103a) un premier signal depuis l'observateur, dans lequel le premier signal inclut un premier signal de détection, utilisé par l'observateur (200) pour détecter l'environnement (305) ou l'objet (306) dans l'environnement (305) et le premier signal de détection comprend des informations relatives à l'identité de l'observateur (200) ;
déterminer (104a) l'identité de l'observateur à partir des informations relatives à l'identité de l'observateur comprises dans le premier signal reçu ;
transmettre (105a) un deuxième signal à l'observateur identifié pour demander à l'observateur identifié de participer au processus de détection collaborative ; et
mettre en place (106a) le processus de détection collaborative en cas d'accord de l'observateur identifié, dans lequel la mise en place (106a) comprend l'établissement d'un ou plusieurs canaux de communication entre le premier UE (201a) et l'observateur (200).

18. Premier UE (201a) selon la revendication 17, étant configuré pour réaliser un procédé selon l'une quelconque des revendications 2 à 15.

19. Observateur (200), une entité comprenant une interface de détection, observant un environnement (305) ou un objet (306) dans l'environnement (305), pour mettre en place un processus de détection collaborative avec un premier UE (201a), l'observateur (200) étant configuré pour :
transmettre (101b) un premier signal au premier UE (201a), dans lequel le premier signal inclut un premier signal de détection, utilisé par l'observateur (200) pour détecter l'environnement (305) ou l'objet (306) dans l'environnement (305) et le premier signal de détection comprend des informations relatives à l'identité de l'observateur (200) ;
recevoir (102b) un deuxième signal depuis le premier UE (201a), dans lequel le deuxième signal est pour demander à l'observateur (200) de participer au processus de détection collaborative avec le premier UE (201a) ;
accepter (103b) de participer au processus de détection collaborative avec le premier UE (201a) ; et
mettre en place (104b) le processus de détection collaborative avec le premier UE (201a), dans lequel la mise en place (104b) comprend l'établissement d'un ou plusieurs canaux de communication entre le premier UE (201a) et l'observateur (200).

20. Programme informatique (1001), comprenant des instructions qui, lorsqu'elles sont exécutées sur un processeur (1002) d'un premier UE (201a), amènent le premier UE (201a) à réaliser un procédé selon l'une quelconque des revendications 1 à 15.

21. Produit de programme informatique (1004) qui comprend un support de stockage lisible par ordinateur sur lequel est stocké un programme informatique selon la revendication 20.

22. Programme informatique (1101), comprenant des instructions qui, lorsqu'elles sont exécutées sur un processeur (1102) appartenant à un observateur (200), amènent l'observateur (200) à réaliser un procédé selon la revendication 16.

23. Produit de programme informatique (1104) qui comprend un support de stockage lisible par ordinateur sur lequel est stocké un programme informatique selon la revendication 22.
